# FASCICULE DE BREVET EUROPEEN

(11) **EP 4 081 347 B1**
(45) Date de publication et mention de la délivrance du brevet: **05.04.2023**
(21) Numéro de dépôt: 22705428.5
(22) Date de dépôt: 20.01.2022
(51) Int. Cl.: B03B 9/04, B03C 7/00, B03C 7/02, C04B 18/06

(54) **PROCÉDÉ ET INSTALLATION DE TRAITEMENT DE CENDRES VOLANTES**
VERFAHREN UND ANLAGE ZUR BEHANDLUNG VON FLUGASCHE
METHOD AND FACILITY FOR TREATING FLY ASH

(30) Priorité: 29.01.2021 FR 2100893
(43) Date de publication de la demande: 02.11.2022
(73) Titulaire: Fives FCB, 59650 Villeneuve d'Ascq (FR)
(72) Inventeur: ARBOS, Joaquin, 59650 Villeneuve d'Ascq (FR); CORDONNIER, Alain, 59650 Villeneuve d'Ascq (FR); LAUWERIE, Fabrice, 59650 Villeneuve d'Ascq (FR)
(74) Mandataire: Novagraaf Group
(86) Numéro de dépôt international: PCT/FR2022/050110
(87) Numéro de publication internationale: WO 2022/162295

(56) Documents cités:
- WO-A1-2016/135383
- KR-B1- 101 903 366
- KR-B1- 102 127 838
- US-B1- 6 681 938

## Description

### Domaine technique de l'invention

L'invention concerne le domaine des traitements des cendres volantes, et plus précisément concerne un procédé de valorisation des cendres volantes afin de les rendre propres à une utilisation dans un procédé ultérieur. En particulier, les cendres volantes sont de nature minérale, et présentent un pouvoir pouzzolanique les rendant intéressantes pour la production de ciment et de béton.

### Arrière-plan technique

Les cendres sont typiquement le produit des centrales thermiques utilisant un combustible fossile solide comme le charbon. Si les centrales thermiques de nouvelle génération produisent des cendres ne nécessitant pas ou peu de traitement avant de pouvoir être utilisées par exemple comme ajout dans du ciment, celles issues de centrales thermiques plus anciennes présentent une concentration en carbone trop élevée pour pouvoir être utilisées en leur état brut. En effet, le carbone est un constituant indésirable pour les ciments et les bétons, car il en dégrade la qualité et leur apporte une couleur noire.

Les cendres volantes sont principalement utilisées dans l'industrie cimentière pour diminuer la quantité de clinker en la remplaçant par des cendres volantes dans la confection de ciment, afin de réduire le coût de ce dernier et diminuer l'impact de sa production sur l'environnement. Une autre utilisation consiste à ajouter des cendres volantes dans la confection du béton, c'est-à-dire, au moment de mélanger le ciment avec l'eau, les granulats, et éventuellement d'autres adjuvants.

Il est connu d'extraire le carbone des cendres afin de les valoriser.

Le document KR 101 903 366 B1 décrit un procédé de traitement de cendres contenant une concentration initiale en carbone pour obtenir des cendres contenant une concentration finale en carbone prédéterminée inférieure à la concentration initiale.

Le brevet européen EP0961657 décrit un procédé d'extraction de carbone dans des cendres volantes. Cette extraction est réalisée au moyen d'un dispositif électrostatique.

Bien que ce procédé permette une extraction du carbone des cendres volantes, il demeure perfectible. En effet, ce procédé présente plusieurs inconvénients, parmi lesquels notamment le fait de décarboner des cendres volantes ayant une certaine humidité. La demanderesse a déterminé qu'une extraction du carbone des cendres volantes humides au moyen d'un dispositif électrostatique grève l'efficacité du procédé. En particulier, cette extraction s'avère être particulièrement énergivore. Un autre inconvénient de ce procédé est que l'extraction du carbone est réalisée sur l'intégralité des cendres volantes, indépendamment de la granulométrie, ceci ayant pour conséquence une perte d'efficacité de l'extraction du carbone.

A cet effet, un premier objet de l'invention est de proposer un nouveau procédé de valorisation des cendres volantes peu coûteux.

Un deuxième objet de l'invention est de proposer un nouveau procédé de valorisation des cendres volantes facilement maitrisable.

Un troisième objet de l'invention est de proposer un nouveau procédé de valorisation des cendres volantes particulièrement adapté pour l'industrie du ciment et du béton.

Un quatrième objet de l'invention est de proposer un nouveau procédé de valorisation des cendres volantes dont l'empreinte environnemental est maîtrisée.

### Résumé de l'invention

A cet effet, il est proposé en premier lieu un procédé de traitement de cendres contenant une concentration initiale en carbone pour obtenir des cendres contenant une concentration finale en carbone prédéterminée inférieure à la concentration initiale, le procédé comprenant :
- une étape de séparation granulométrique des cendres en au moins deux fractions, une fraction grossière et une fraction fine, la fraction grossière ayant une granulométrie supérieure à la fraction fine,
- une étape d'extraction de carbone des cendres,

procédé dans lequel, l'étape d'extraction est postérieure à l'étape de séparation, ladite étape d'extraction étant effectuée uniquement sur la fraction grossière, par séparation électrostatique
le procédé comprenant une étape de séchage des cendres pendant laquelle la température desdites cendres est supérieure à 60°C.

Ce procédé permet avantageusement d'améliorer l'efficacité de l'extraction du carbone.

Diverses caractéristiques supplémentaires peuvent être prévues seules ou en combinaison :
- la séparation granulométrique est effectuée au moyen d'un dispositif de séparation ayant une maille de coupure comprise entre 10 et 200 micromètres ;
- la séparation granulométrique est effectuée au moyen d'un dispositif de séparation ayant une maille de coupure comprise entre 20 et 120 micromètres ;
- le procédé comprend une étape de refroidissement des cendres de sorte à obtenir une température de cendres prédéterminée, l'étape de refroidissement étant postérieure à l'étape de séchage ;
- à l'issue de l'étape de refroidissement, les cendres sont à une température comprise entre 20°C et 60°C ;
- à l'issue de l'étape de refroidissement, les cendres sont à une température comprise entre 30°C et 50°C ;
- l'étape de séparation est postérieure à l'étape de refroidissement ;
- celui-ci comprend une étape de broyage de la fraction grossière ;
- la fraction grossière broyée fait à nouveau l'objet d'une séparation granulométrique au moyen d'une maille de coupure comprise entre 10 et 200 micromètres, de préférence entre 20 et 120 micromètres ;
- 30% en masse des cendres initiales présentent une granulométrie supérieure à 45 micromètres ;
- 10% en masse des cendres initiales présentent une granulométrie supérieure à 100 micromètres.

Il est proposé en deuxième lieu une installation de traitement de cendres contenant une concentration initiale en carbone pour obtenir des cendres contenant une concentration finale en carbone prédéterminée inférieure à la concentration initiale, les cendres se déplaçant selon un sens donné de déplacement dans l'installation, ladite installation comprenant :
- un séparateur granulométrique,
- un séparateur électrostatique agencé en aval du séparateur granulométrique, selon le sens de déplacement des cendres, l'installation comprend en outre :
- un refroidisseur, ledit refroidisseur étant agencé en amont du séparateur granulométrique, et
- un dispositif de séchage,

l'installation étant destiné à mettre en oeuvre un procédé tel que précédemment décrit.

Diverses caractéristiques supplémentaires peuvent être prévues seules ou en combinaison :
- celle-ci comprend un broyeur agencé en aval du séparateur électrostatique, selon le sens de déplacement des cendres.

### Brève description des figures

D'autres caractéristiques et avantages de l'invention apparaitront au cours de la lecture de la description détaillée qui va suivre pour la compréhension de laquelle on se reportera au dessin annexé dans lequel :
[Fig 1] la figure 1 est une représentation schématique d'une installation selon un premier mode de réalisation de l'invention.
[Fig 2] la figure 2 est une représentation schématique d'une installation selon un deuxième mode de réalisation de l'invention.

### Description détaillée de l'invention

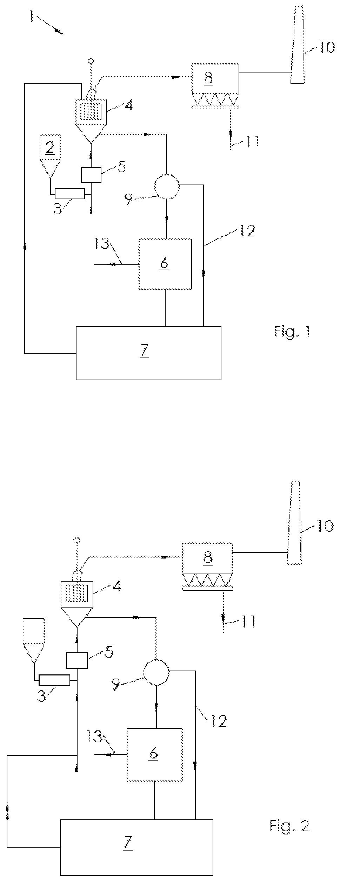

Sur les figures 1 et 2, est représentée une installation 1 de traitement de cendres.

L'installation 1 comprend :
- un réservoir 2 de stockage de cendres,
- un dispositif 3 de séchage,
- un séparateur 4 granulométrique apte à séparer par critère granulométrique,
- un refroidisseur 5,
- un séparateur 6 électrostatique de carbone,
- un broyeur 7
- un filtre 8.

L'installation 1 comprend en outre un dispositif 9 de régulation du débit des cendres, un ventilateur (non représenté sur les dessins), et une cheminée 10.

L'installation 1 comprend plusieurs canalisations et dispositifs de manutention reliant entre eux les éléments précédemment évoqués.

Les cendres sont mises en mouvement dans l'installation 1 au moyen d'un gaz, typiquement de l'air, et/ou par gravité et/ou avec le concours de dispositifs de manutention, telles que des vis sans fin ou des élévateurs.

Dans ce qui suit, un procédé de traitement de cendres va être décrit. Ce procédé met en oeuvre l'installation 1 des figures 1 et 2.

Des cendres initiales contenant une concentration initiale en carbone sont stockées dans le réservoir 2 de stockage. Les cendres ont une concentration en carbone comprise entre 5% et 20%. Il est ici, et dans ce qui suivra, fait référence à des concentrations massiques.

Les cendres sont acheminées jusqu'au dispositif 3 de séchage. Dans le dispositif 3 de séchage, des gaz à haute température, permettent d'évaporer l'eau contenue dans les cendres. Ainsi le procédé comprend une étape de séchage des cendres. Dans l'étape de séchage, les cendres sont portées à une température supérieure à 60°C. Avantageusement, les cendres sont portées à une température avoisinant 90°C. A l'issue de l'étape de séchage, l'eau contenue dans les cendres s'est évaporée, à l'exception de résidus non significatifs, l'humidité étant inférieure à 1%.

Avantageusement, 30% en masse des cendres initiales présentent une granulométrie supérieure à 45 micromètres. Avantageusement 10% en masse des cendres initiales présentent une granulométrie supérieure à 100 micromètres. Ces caractéristiques granulométriques permettent un fonctionnement optimal de l'installation 1, en permettant une extraction du carbone efficace.

Le procédé comprend avantageusement, une étape de refroidissement des cendres sèches. L'étape de refroidissement est postérieure à l'étape de séchage. Le refroidissement des cendres sèches est réalisé dans le refroidisseur 5.

Avantageusement, à l'issue de l'étape de refroidissement, les cendres sont à une température comprise entre 20°C et 60°C, et de préférence entre 30°C et 50°C. Le séparateur 6 électrostatique réalise une extraction du carbone efficace dans ces plages de valeurs.

Le procédé comprend une étape de séparation granulométrique réalisée au moyen du séparateur 4 granulométrique. A l'issue de l'étape de séparation granulométrique, les cendres sont séparées en deux fractions : une fraction fine et une fraction grossière dont la granulométrie est supérieure à celle de la fraction fine. L'étape de séparation granulométrique est antérieure à l'étape d'extraction.

En séparant les cendres en deux fractions distinctes sur critère granulométrique, il devient possible d'améliorer l'efficacité de l'extraction du carbone. En effet, la fraction grossière présente une concentration en carbone plus élevée que la fraction fine. En décarbonant la fraction grossière plutôt que la fraction fine, l'efficacité du procédé est améliorée de façon significative. De plus, le séparateur électrostatique réalise une extraction du carbone plus efficace sur une fraction grossière que sur une fraction fine.

Avantageusement, le séparateur granulométrique a une maille de coupure comprise entre 10 et 200 micromètres. La maille de coupure est de préférence comprise entre 20 et 120 micromètres. En d'autres termes, et en prenant pour exemple la valeur de 90 micromètres, la fraction fine présente une granulométrie inférieure à cette valeur, tandis que la fraction grossière présente une granulométrie supérieure à ce chiffre.

La demanderesse a déterminé qu'une maille de coupure comprise dans ces intervalles permet d'obtenir une fraction grossière dont la granulométrie permet d'améliorer le fonctionnement du séparateur électrostatique, et ce faisant, améliorant l'efficacité de l'extraction du carbone.

Dans un mode préféré de réalisation, la maille de coupure est égale 90 micromètres.

La fraction fine, sortant du séparateur 4 granulométrique, n'est pas traitée. Elle est envoyée vers le filtre 8, où l'air est évacué par la cheminée 10 après filtration, tandis que les cendres de la fraction fine sont récupérées par une sortie 11 de collecte du produit fini, c'est-à-dire, des cendres traitées.

La fraction grossière, sortant du séparateur 4 granulométrique, est envoyée vers le séparateur 6 électrostatique. Entre le séparateur 4 granulométrique et le séparateur 6 électrostatique, est agencé un dispositif 9 de régulation de débit. Ce dispositif 9 de régulation permet d'éviter une surcharge d'alimentation du séparateur 6 électrostatique avec des cendres, car celui-ci ne fonctionne de façon optimale qu'en dessous d'un débit prédéterminé. Lorsque le débit acceptable par le séparateur 6 électrostatique est atteint, le surplus est envoyé vers un circuit 12 de déviation par le dispositif 9 de régulation, pour contourner le séparateur 6 électrostatique.

Le procédé comprend une étape d'extraction de carbone des cendres. L'étape d'extraction est postérieure à l'étape de séparation granulométrique. L'extraction du carbone est effectuée par séparation électrostatique au moyen du séparateur 6 électrostatique. Le carbone extrait, est évacué du séparateur 6 électrostatique par une évacuation 13.

Un tel procédé permet d'obtenir une extraction efficace du carbone. L'énergie consommée pour l'extraction est significativement réduite.

En sortie du séparateur 6 électrostatique, est obtenue une fraction grossière décarbonée. La concentration en carbone dans la fraction grossière est fonction des besoins. Toutefois, et afin de correspondre aux exigences de l'industrie cimentière, le taux de carbone en sortie du séparateur 6 électrostatique est inférieur à 5% en masse, et de préférence inférieur à 2%.

La fraction grossière décarbonée est ensuite envoyée vers le broyeur 7.

Ces cendres décarbonées et broyées, sont ensuite envoyées vers le séparateur 4 granulométrique. Dans le séparateur 4 granulométrique, une partie des cendres décarbonées, suffisamment broyée et donc suffisamment fine, sera envoyée vers le filtre 8 et recueillie à la sortie 11 de collecte du filtre 8 en tant que cendres fines et décarbonées. En parallèle, une partie des cendres décarbonées, mais insuffisamment broyées, est renvoyée vers le séparateur 6 électrostatique. Les cendres fines et décarbonées contiennent une concentration finale de carbone prédéterminée inférieure à la concentration initiale des cendres.

Dans une variante de réalisation représentée sur la figure 2, les cendres décarbonées et broyées sortant du broyeur 7, sont envoyées au dispositif de refroidissement.

Ce procédé présente plusieurs avantages parmi lesquels le fait qu'il soit :
- peu coûteux,
- facilement maîtrisable,
- particulière adapté pour l'industrie du ciment et du béton,
- efficace, et présente une empreinte environnementale maîtrisée.

## Revendications

1. Procédé de traitement de cendres contenant une concentration initiale en carbone pour obtenir des cendres contenant une concentration finale en carbone prédéterminée inférieure à la concentration initiale, le procédé comprenant :
- une étape de séparation granulométrique des cendres en au moins deux fractions, une fraction grossière et une fraction fine, la fraction grossière ayant une granulométrie supérieure à la fraction fine,
- une étape d'extraction de carbone des cendres,
procédé dans lequel, l'étape d'extraction est postérieure à l'étape de séparation, ladite étape d'extraction étant effectuée uniquement sur la fraction grossière, par séparation électrostatique
le procédé comprenant une étape de séchage des cendres pendant laquelle la température desdites cendres est supérieure à 60°C.

2. Procédé selon l'une quelconque des revendications précédentes dans lequel, la séparation granulométrique est effectuée au moyen d'un dispositif de séparation ayant une maille de coupure comprise entre 10 et 200 micromètres.

3. Procédé selon la revendication 1 dans lequel, la séparation granulométrique est effectuée au moyen d'un dispositif de séparation ayant une maille de coupure comprise entre 20 et 120 micromètres.

4. Procédé selon l'une quelconque des revendications précédentes dans lequel, celui-ci comprend une étape de refroidissement des cendres de sorte à obtenir une température de cendres prédéterminée, l'étape de refroidissement étant postérieure à l'étape de séchage.

5. Procédé selon la revendication 4 dans lequel, à l'issue de l'étape de refroidissement, les cendres sont à une température comprise entre 20°C et 60°C.

6. Procédé selon la revendication 4 dans lequel, à l'issue de l'étape de refroidissement, les cendres sont à une température comprise entre 30°C et 50°C.

7. Procédé selon l'une quelconque des revendications 4 à 6 dans lequel, l'étape de séparation est postérieure à l'étape de refroidissement.

8. Procédé selon l'une quelconque des revendications précédentes dans lequel, celui-ci comprend une étape de broyage de la fraction grossière.

9. Procédé selon la revendication 8 dans lequel, l'étape de broyage est postérieure à l'étape d'extraction.

10. Procédé selon l'une quelconque des revendications 8 ou 9 dans lequel, la fraction grossière broyée fait à nouveau l'objet d'une séparation granulométrique au moyen d'une maille de coupure comprise entre 10 et 200 micromètres, de préférence entre 20 et 120 micromètres.

11. Procédé selon l'une quelconque des revendications précédentes, dans lequel, 30% en masse des cendres initiales présentent une granulométrie supérieure à 45 micromètres.

12. Procédé selon l'une quelconque des revendications précédentes, dans lequel, 10% en masse des cendres initiales présentent une granulométrie supérieure à 100 micromètres.

13. Installation (1) de traitement de cendres contenant une concentration initiale en carbone pour obtenir des cendres contenant une concentration finale en carbone prédéterminée inférieure à la concentration initiale, les cendres se déplaçant selon un sens donné de déplacement dans l'installation (1), ladite installation (1) comprenant :
- un séparateur (4) granulométrique,
- un séparateur (6) électrostatique agencé en aval du séparateur (4) granulométrique, selon le sens de déplacement des cendres, l'installation (1), l'installation comprend en outre :
- un refroidisseur (5), ledit refroidisseur (5) étant agencé en amont du séparateur (4) granulométrique, et
- un dispositif (3) de séchage,
l'installation étant destiné à mettre en oeuvre un procédé selon l'une quelconque des revendications 1 à 8.

14. Installation (1) selon la revendication 13 dans laquelle, celle-ci comprend un broyeur (7) agencé en aval du séparateur (6) électrostatique, selon le sens de déplacement des cendres, ladite installation (1) étant apte à mettre en oeuvre un procédé selon l'une quelconque des revendications 9 à 12.

## Patentansprüche

1. Verfahren zum Behandeln von Asche, enthaltend eine anfängliche Kohlenstoffkonzentration, um Asche zu erhalten, enthaltend eine vorbestimmte endgültige Kohlenstoffkonzentration, die niedriger als die anfängliche Konzentration ist, wobei das Verfahren umfasst:
- einen Schritt einer Korngrößentrennung der Asche in mindestens zwei Fraktionen, eine Grobfraktion und eine Feinfraktion, wobei die Grobfraktion eine größere Korngröße als die Feinfraktion aufweist,
- einen Schritt eines Extrahierens von Kohlenstoff aus der Asche, wobei in dem Verfahren der Extraktionsschritt nach dem Trennschritt erfolgt, wobei der Extraktionsschritt nur an der Grobfraktion durchgeführt wird, durch elektrostatische Trennung, wobei das Verfahren einen Schritt eines Trocknens der Asche umfasst, während dessen die Temperatur der Asche größer als 60 °C ist.

2. Verfahren nach einem der vorstehenden Ansprüche, wobei die Korngrößentrennung mittels einer Trennvorrichtung durchgeführt wird, die eine Kornscheide zwischen 10 und 200 Mikrometern aufweist.

3. Verfahren nach Anspruch 1, wobei die Korngrößentrennung mittels einer Trennvorrichtung durchgeführt wird, die eine Kornscheide zwischen 20 und 120 Mikrometern aufweist.

4. Verfahren nach einem der vorstehenden Ansprüche, wobei dieses einen Schritt eines Kühlens der Asche umfasst, um eine vorbestimmte Aschetemperatur zu erhalten, wobei der Kühlungsschritt nach dem Trocknungsschritt erfolgt.

5. Verfahren nach Anspruch 4, wobei die Asche am Ende des Kühlungsschritts eine Temperatur zwischen 20 °C und 60 °C aufweist.

6. Verfahren nach Anspruch 4, wobei die Asche am Ende des Kühlungsschritts eine Temperatur zwischen 30 °C und 50 °C aufweist.

7. Verfahren nach einem der Ansprüche, 4 bis 6 wobei der Trennungsschritt nach dem Kühlungsschritt erfolgt.

8. Verfahren nach einem der vorstehenden Ansprüche, wobei dieses einen Schritt eines Zerkleinerns der Grobfraktion umfasst.

9. Verfahren nach einem der Ansprüche, 8 wobei der Trennungsschritt nach dem Kühlungsschritt erfolgt.

10. Verfahren nach einem der Ansprüche 8 oder 9, wobei die zerkleinerte Grobfraktion erneut einer Korngrößentrennung mittels einer Kornscheide zwischen 10 und 200 Mikrometern, vorzugsweise zwischen 20 und 120 Mikrometern, unterzogen wird.

11. Verfahren nach einem der vorstehenden Ansprüche, wobei 30 Masse-% der anfänglichen Asche eine Korngröße von größer als 45 Mikrometer vorweisen.

12. Verfahren nach einem der vorstehenden Ansprüche, wobei 10 Masse-% der anfänglichen Asche eine Korngröße von größer als 100 Mikrometer vorweisen.

13. Anlage (1) zum Behandeln von Asche, enthaltend eine anfängliche Kohlenstoffkonzentration, um Asche zu erhalten, enthaltend eine vorbestimmte endgültige Kohlenstoffkonzentration, die niedriger als die anfängliche Konzentration ist, wobei sich die Asche in einer gegebenen Bewegungsrichtung in der Anlage (1) bewegt, wobei die Anlage (1) umfasst:
- einen Korngrößentrenner (4),
- einen elektrostatischen Trenner (6), der stromabwärts des Korngrößentrenners (4) in der Bewegungsrichtung der Asche angeordnet ist,
die Anlage (1), wobei die Anlage ferner umfasst:
- einen Kühler (5), wobei der Kühler (5) stromaufwärts des Korngrößentrenners (4) angeordnet ist, und
- eine Trocknungsvorrichtung (3),
wobei die Anlage dazu bestimmt ist, ein Verfahren nach einem der Ansprüche 1 bis 8 auszuführen.

14. Anlage (1) nach Anspruch 13, wobei diese eine Zerkleinerungsmaschine (7) umfasst, die stromabwärts des elektrostatischen Trenners (6) in der Bewegungsrichtung der Asche angeordnet ist, wobei die Anlage (1) geeignet ist, ein Verfahren nach einem der Ansprüche 9 bis 12 auszuführen.

## Claims

1. Method for treating ash containing an initial concentration of carbon in order to obtain ash containing a predetermined final concentration of carbon lower than the initial concentration, the method comprising:
- a step of size separation of the ash into at least two fractions, a coarse fraction and a fine fraction, the coarse fraction having a greater particle size than the fine fraction,
- a step of extracting carbon from the ash, in which method the extraction step is subsequent to the separation step, said extraction step being performed only on the coarse fraction, by electrostatic separation,
the method comprising a step of drying the ash, during which the temperature of said ash is higher than 60°C.

2. Method according to any of the preceding claims, wherein the size separation is performed by means of a separation device having a cut-point of between 10 and 200 micrometers.

3. Method according to claim 1, wherein the size separation is performed by means of a separation device having a cut-point of between 20 and 120 micrometers.

4. Method according to any of the preceding claims, wherein the method comprises a step of cooling the ash to a predetermined ash temperature, the cooling step being subsequent to the drying step.

5. Method according to claim 4, wherein, at the end of the cooling step, the ash is at a temperature of between 20°C and 60°C.

6. Method according to claim 4, wherein, at the end of the cooling step, the ash is at a temperature of between 30°C and 50°C.

7. Method according to any of claims 4 to 6, wherein the separation step is subsequent to the cooling step.

8. Method according to any of the preceding claims, wherein the method comprises a step of grinding the coarse fraction.

9. Method according to claim 8, wherein the grinding step is subsequent to the extraction step.

10. Method according to either claim 8 or claim 9, wherein the ground coarse fraction is again subjected to size separation by means of a cut-point of between 10 and 200 micrometers, preferably of between 20 and 120 micrometers.

11. Method according to any of the preceding claims, wherein 30% by weight of the initial ash has a particle size greater than 45 micrometers.

12. Method according to any of the preceding claims, wherein 10% by weight of the initial ash has a particle size greater than 100 micrometers.

13. Apparatus (1) for treating ash containing an initial concentration of carbon in order to obtain ash containing a predetermined final concentration of carbon lower than the initial concentration, the ash moving in a given movement direction in the apparatus (1), said apparatus (1) comprising:
- a size separator (4),
- an electrostatic separator (6) arranged downstream of the size separator (4), in the movement direction of the ash, the apparatus (1), the apparatus further comprising:
- a cooler (5), said cooler (5) being arranged upstream of the size separator (4), and
- a drying device (3),
the apparatus being intended for carrying out a method according to any of claims 1 to 8.

14. Apparatus (1) according to claim 13, wherein the apparatus comprises a grinder (7) arranged downstream of the electrostatic separator (6), in the movement direction of the ash, said apparatus (1) being suitable for carrying out a method according to any of claims 9 to 12.
